(19) Europäisches Patentamt
European Patent Office
Office européen des brevets

(11) **EP 2 545 207 B1**

(12) **FASCICULE DE BREVET EUROPEEN**

(45) Date de publication et mention
de la délivrance du brevet:
**02.04.2014 Bulletin 2014/14**

(51) Int Cl.:
**C25B 9/04** *(2006.01)*    **C25B 9/08** *(2006.01)*
**C25B 9/18** *(2006.01)*

(21) Numéro de dépôt: **11707435.1**

(22) Date de dépôt: **11.03.2011**

(86) Numéro de dépôt international:
**PCT/EP2011/053728**

(87) Numéro de publication internationale:
**WO 2011/110679 (15.09.2011 Gazette 2011/37)**

(54) **DISPOSITIF D'ELECTROLYSE DE L'EAU A HAUTE TEMPERATURE A FONCTIONNEMENT AMELIORE**

VORRICHTUNG FÜR HOCHTEMPERATUR-WASSERELEKTROLYSE MIT VERBESSERTEM BETRIEB

DEVICE FOR HIGH-TEMPERATURE WATER ELECTROLYSIS HAVING IMPROVED OPERATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.03.2010 FR 1051781**

(43) Date de publication de la demande:
**16.01.2013 Bulletin 2013/03**

(73) Titulaire: **Commissariat à l'Énergie Atomique et aux Énergies Alternatives
75015 Paris (FR)**

(72) Inventeur: **PERRET, Christian
F-38000 Grenoble (FR)**

(74) Mandataire: **Ilgart, Jean-Christophe et al
BREVALEX
95, rue d'Amsterdam
75378 Paris Cedex 8 (FR)**

(56) Documents cités:
**EP-A1- 1 482 585    FR-A1- 2 921 390**

**Description**

**DOMAINE TECHNIQUE**

L'invention concerne un dispositif d'électrolyse de l'eau à haute température appelé aussi électrolyseur d'eau à haute température (EHT) appelé aussi électrolyseur de vapeur d'eau à haute température (EVHT).

Elle a trait plus particulièrement à une nouvelle architecture d'un électrolyseur EHT qui permet de rendre plus homogène son fonctionnement.

**ART ANTÉRIEUR**

Un électrolyseur de l'eau à haute température (EHT) comprend au moins une cellule électrochimique élémentaire formée d'un électrolyte, d'une cathode et d'une anode, l'électrolyte étant intercalé entre les l'anode et la cathode. L'électrolyte est étanche au gaz, isolant électronique et conducteur ionique. Les électrodes (anode et cathode) sont en matériau poreux et conducteurs électroniques.

Un électrolyseur EHT comprend également des dispositifs d'interconnexion fluidique et électrique qui sont en contact électrique avec une ou des électrodes. Ces dispositifs d'interconnexion, assurent en général les fonctions d'amenée et collecte de courant et qui délimitent un ou des compartiments de circulation des gaz.

Ainsi, un compartiment dit cathodique a pour fonction la distribution du courant et de la vapeur d'eau ainsi que de la récupération de l'hydrogène à la cathode en contact.

Un compartiment dit anodique a pour fonction la distribution du courant ainsi que la récupération de l'oxygène produit à l'anode en contact. Un gaz drainant peut en outre être injecté en entrée du compartiment anodique pour évacuer l'oxygène produit. L'injection d'un gaz drainant a pour fonction supplémentaire de jouer le rôle de régulateur thermique. FR 2921390 décrit un dispositif d'électrolyse de l'eau à haute température comprenant une plaque interconnectrice avec des canaux.

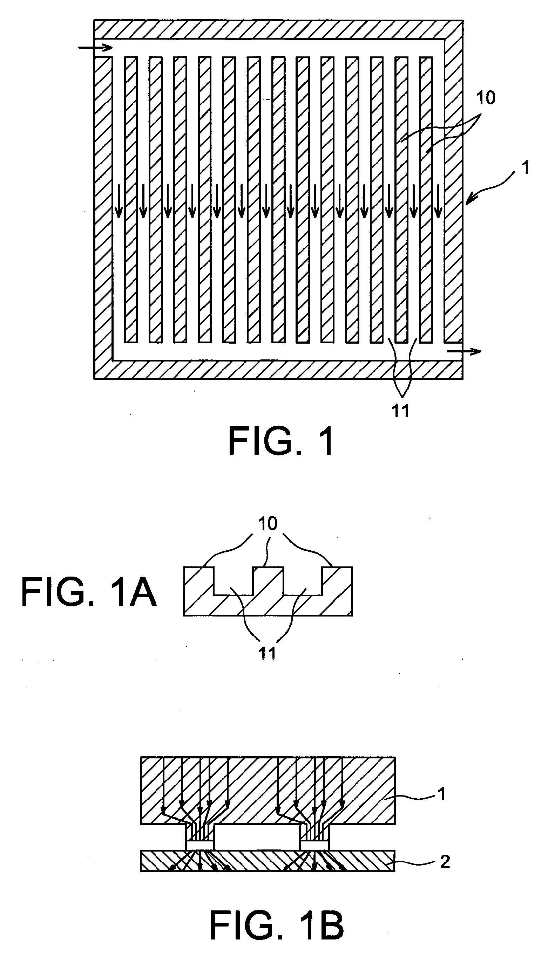

On a représenté en figures 1, 1A et 1B, une plaque à canaux 1 couramment utilisée en tant que dispositif d'interconnexion. L'amenée ou la collecte du courant à l'électrode est réalisée par les dents ou nervures 10 qui sont en contact mécanique direct avec l'électrode concernée. L'amenée de vapeur d'eau à la cathode (ou de gaz drainant à l'anode) est symbolisée par les flèches en figure 1. La collecte de l'hydrogène produit à la cathode (ou de l'oxygène produit à l'anode) est faite par les canaux 11 qui débouchent dans une connexion fluidique, couramment appelée clarinette, commune à l'empilement de cellules. La structure de ce type dispositifs d'interconnexion est faite pour réaliser un compromis entre les deux fonctions d'amenée et collecte (gaz/courant).

Les inconvénients majeurs de cette plaque à canaux peuvent être résumés comme suit.

Tout d'abord, elle ne permet pas d'utiliser la surface d'une cellule d'électrolyse de manière homogène. En effet, la réaction électrochimique se faisant prés de l'interface entre électrode et électrolyte, et nécessitant la présence sur le même lieu du gaz, des électrons et des ions impliqués, les zones sous les dents 10 du collecteur sont faciles à alimenter en électrons, mais difficiles à alimenter en gaz. Les paramètres contraignants sont la perméabilité de l'électrode en contact, son épaisseur et la largeur de la dent 10. De même, la zone sous le canal 11 est difficile à alimenter en électrons, les électrodes existantes à ce jour ayant une conductivité effective faible. Les paramètres contraignants sont la conductivité effective, l'épaisseur et la largeur du canal 11. L'inventeur est d'avis que le ratio R entre la surface d'amenée/collecte de courant et la surface d'amenée de vapeur d'eau ou de collecte des gaz produits est un paramètre indicateur de l'utilisation réelle de la surface de cellule. Dans le cas d'une plaque d'interconnection à canaux 1, le ratio R calculé comme ci-dessous est souvent inférieur à 50 %.

$R = 1/(1+ w/L)$, où $w$ est la largeur du canal 11 et $L$ la largeur de la dent 10.

Ensuite, cette structure de plaque 1 implique des zones de production différenciées avec certaines zones dans lesquelles les densités de production et donc les densités de courant peuvent être très fortes, ceci pour une densité moyenne faible, et donc des sources de dégradation de performances localisées. Ceci est illustré au niveau local (échelle millimétrique) en figure 1B sur lesquelles on peut voir les lignes de courant très fortes représentées qui sont localisées au niveau des nervures 10. De même, en considérant la surface d'électrode, les lignes de courant sont plus fortes en amont qu'en aval du fait de l'évolution de la teneur en eau dans le flux de gaz entre l'amont et l'aval des canaux.

De même, cette structure de plaque 1 implique des inhomogénéités d'alimentation en vapeur d'eau des canaux 11 et obligent à une forte suralimentation de cette vapeur d'eau (on entre un surplus d'eau correspondant à plus 100 % de l'eau consommée) pour obtenir une alimentation pour l'ensemble des canaux 11 stable et homogène, ce qui rend difficile l'atteinte d'un taux d'utilisation en vapeur d'eau élevé. Le conditionnement de cette vapeur et sa mise en pression ont un impact non négligeable sur la consommation d'énergie associée à l'électrolyseur.

En outre, il existe un risque mécanique de mise en flexion d'une cellule si il y a un décalage géométrique important des dents d'une plaque interconnectrice 1 du côté de l'anode et celles d'une plaque du côté de la cathode, où s'il existe des défauts de planéité des dents pouvant poinçonner la cellule et la fissurer. Pour éviter ce risque, il faut une très grande précision dans le montage relatif des plaques de part et d'autre de la cellule et une très grande qualité de réalisation des dents.

Par ailleurs, du coté de l'anode, la structure par canaux avec une entrée et une sortie n'a de raison d'être que lorsqu'un gaz drainant est utilisé pour évacuer l'oxygène produit vers la sortie. Le conditionnement de ce gaz drainant a lui aussi un coût énergétique significatif.

Enfin, cette structure de plaques nécessite une épaisseur de matière importante pour la zone de collection des gaz produits et une mise en forme (usinage) qui peuvent se révéler prohibitives. L'emploi de tôles minces et de l'emboutissage sont utilisées mais limitent de fait les possibilités de réalisation pour la largeur unitaire de dent et le pas entre dents. Aussi, l'inventeur considère qu'avec une telle plaque interconnectrice à canaux 1, la réduction de l'inhomogénéité des courants amenés à chaque cellule ne peut qu'être limitée.

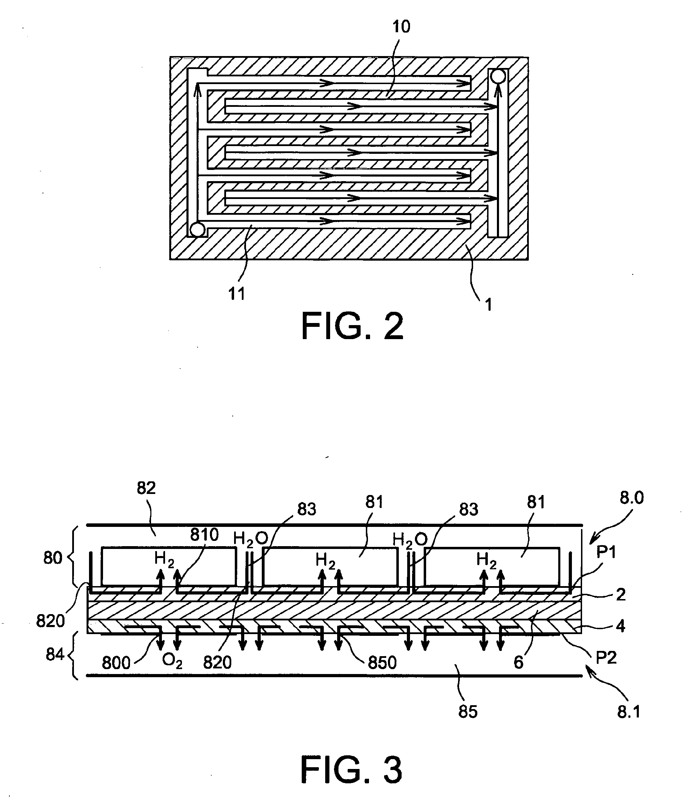

Une autre plaque interconnectrice 1' a déjà été proposée [1]. Elle est représentée en figure 2 avec la circulation du fluide représentée par les flèches: sa structure est de type interdigitée. Elle ne résout pas le problème de la flexion mécanique évoqué pour la plaque 1 et peut engendrer un arrachement hydraulique de l'électrode avec laquelle elle est en contact.

Le but de l'invention est de proposer une solution qui permette de s'affranchir de tout ou partie des inconvénients des plaques interconnectrices existantes à la cathode d'un dispositif d'électrolyse de l'eau à haute température.

## EXPOSÉ DE L'INVENTION

Pour ce faire l'invention a pour objet, un dispositif d'électrolyse de l'eau à haute température, comprenant :

- au moins une cellule d'électrolyse élémentaire formée d'une cathode, d'une anode, et d'un électrolyte intercalé entre la cathode et l'anode,
- un premier dispositif formant un interconnecteur électrique et fluidique consistant en une pièce métallique délimitée par au moins un plan P1, ladite pièce métallique comprenant intérieurement deux chambres, superposées l'une sur l'autre et une pluralité de trous répartis sur la surface, sensiblement perpendiculaires au plan et divisés en deux groupes, dont un groupe de trous débouche à la fois sur le plan P1 et directement dans la chambre adjacente et l'autre groupe des trous débouche à la fois sur le plan P1 et dans la chambre la plus éloignée par l'intermédiaire de canaux, le plan P1 du premier interconnecteur étant en contact mécanique avec le plan de la cathode.

Une partie du compartiment cathodique selon l'invention par laquelle on amène la vapeur d'eau est ainsi constitué d'une des deux chambres et un groupe de trous. L'autre groupe de trous et l'autre des deux chambres selon l'invention constituent une autre partie du compartiment cathodique par laquelle on récupère l'hydrogène produit à la cathode.

Dans le cadre de l'invention, toutes formes de trous variées peuvent être envisagées : trous à section circulaire, trous oblongs, trous sous la forme de fentes allongées....

Dans le cadre de l'invention, on entend par interconnecteur fluidique et électrique, un système de connexion d'amenée ou de collecte de courant et d'amenée et de collecte d'un fluide à une électrode d'une cellule d'électrolyse. Ainsi, un dispositif d'électrolyse selon l'invention peut comprendre une seule cellule d'électrolyse avec un premier interconnecteur en contact avec sa cathode et un deuxième interconnecteur décrit ci-dessous en contact avec son anode. De même, comme décrit par la suite, dans un empilement de cellules d'électrolyse selon l'invention, une plaque interconnectrice peut comprendre un premier interconnecteur en contact avec la cathode d'une cellule d'électrolyse élémentaire et un deuxième interconnecteur en contact avec l'anode de la cellule d'électrolyse adjacente.

On s'affranchit des inconvénients de la traditionnelle architecture de plaque interconnectrice à canaux selon l'état de l'art telle que présentée en préambule.

Ainsi, grâce à l'invention, on obtient comparativement aux architectures d'électrolyseur EHT selon l'état de l'art une densité de production uniforme par cellule d'électrolyse et un meilleur taux d'utilisation (ou de conversion) de vapeur d'eau.

En effet, grâce à la pluralité de trous débouchant sur le plan de la cathode, on permet tout d'abord à toute la surface de cellule d'avoir un comportement électrique homogène en tout point avec une résistance de contact électrique limitée entre cathode et premier interconnecteur. Autrement dit, la distribution du courant à la cathode est optimale.

De même, du fait de la superposition des chambres et de la pluralité des trous, on peut injecter la vapeur d'eau directement de manière homogène en tout point de la cathode au travers d'un groupe de trous, ce qui a pour effet, contrairement à l'état de l'art, une limitation de la surtension de concentration.

Pour l'injection de la vapeur d'eau, on peut prévoir deux variantes.

Selon une première variante, la chambre adjacente constitue la chambre par laquelle la vapeur d'eau est amenée et la chambre la plus éloignée constitue la chambre de collecte de l'hydrogène produit par l'électrolyse.

Selon une deuxième variante alternative, la chambre adjacente constitue la chambre de collecte de l'hydrogène produit par l'électrolyse et la chambre la plus éloignée constitue la chambre par laquelle la vapeur d'eau est amenée.

Avantageusement, les trous sont à section circulaire avec un diamètre compris entre 0.5 et 5 mm, de préférence compris entre 1.25 mm et 2.5 mm.

Avantageusement encore, la distance entre le centre de deux trous adjacents est comprise entre 7 mm et 28 mm, de préférence compris entre 7 mm et 14 mm. Avec de telles distances, on peut obtenir des pertes de charge de moins de 200 millibars, selon des cellules d'électrolyse conformes à celles utilisées dans les calculs en référence aux exemples ci-après.

Les trous sont de préférence alignés selon des lignes parallèles entre elles et régulièrement espacées.

Pour rendre encore plus homogène le fonctionnement à la cathode, on prévoit avantageusement une ligne de groupe trous débouchant à la fois sur le plan P1 et directement dans la chambre adjacente est alternée avec une ligne de groupe de trous qui débouche à la fois sur le plan P1 et dans la chambre la plus éloignée.

L'alternance peut être en outre réalisée de telle manière que les trous du groupe débouchant à la fois sur le plan P1 et directement dans la chambre adjacente sont en quinconce avec les trous du groupe débouchant à la fois sur le plan P1 et dans la chambre la plus éloignée, chaque trou du groupe débouchant à la fois sur le plan P1 et directement dans la chambre adjacente étant au milieu de quatre trous du groupe débouchant à la fois sur le plan P1 et dans la chambre la plus éloignée et vice-versa.

De préférence encore, les quatre trous d'un groupe forment un carré, le trou de l'autre groupe étant au milieu du carré. Le principe de répétition par alternance en quinconce induit un fonctionnement encore plus homogène sur toute la cellule tant du point de vue de la fluidique (amenée de la vapeur d'eau et collecte de l'hydrogène produit), que de la thermique (chaleur répartie en tout point de la cellule d'électrolyse uniformément) ou de l'électrochimie (réaction d'électrolyse identique en tout point de la cellule). En outre, le premier interconnecteur est ainsi de dimensionnement simple à réaliser.

Le dispositif d'électrolyse de l'invention peut comprendre un deuxième dispositif formant un interconnecteur électrique et fluidique consistant en une pièce métallique délimitée par au moins un plan, ladite pièce métallique comprenant intérieurement une chambre et une pluralité de trous répartis sur la surface, sensiblement perpendiculaires au plan et débouchant à la fois sur ce dernier et dans la chambre, le plan du deuxième interconnecteur étant en contact mécanique avec le plan de l'anode.

Le plan P2 du deuxième interconnecteur peut être en contact mécanique direct avec le plan de l'anode.

Le dispositif d'électrolyse de l'eau selon l'invention peut comprendre un empilement de cellules d'électrolyse élémentaires formées chacune d'une cathode, d'une anode et d'un électrolyte intercalé entre la cathode et l'anode, une plaque interconnectrice comprenant un premier et un deuxième interconnecteur étant agencée entre deux cellules élémentaires adjacentes, tel que le plan P1 du premier interconnecteur est en contact mécanique avec la cathode d'une des deux cellules élémentaires et le plan du deuxième interconnecteur est en contact mécanique avec l'anode de l'autre des deux cellules élémentaires.

L'invention concerne enfin un ensemble de production d'hydrogène comprenant une pluralité de dispositifs d'électrolyse tels que décrits ci-dessus.

## BRÈVE DESCRIPTION DES DESSINS

D'autres avantages et caractéristiques ressortiront mieux à la lecture de la description détaillée faite ci-dessous en référence aux figures parmi lesquelles :

- la figure 1 est une vue schématique de face d'une plaque interconnectrice d'un électrolyseur EHT selon l'état de l'art,
- la figure 1A est une vue de détail en coupe d'une plaque interconnectrice selon la figure 1,
- la figure 1B est une vue analogue à la figure 1A montrant les lignes de courant parcourant la plaque,
- la figure 2 est une vue schématique de face d'une autre plaque interconnectrice d'un électrolyseur selon l'état de l'art,
- la figure 3 est une vue schématique en coupe d'un dispositif d'électrolyse selon l'invention à une cellule d'électrolyse,
- la figure 4 est une vue en perspective interne en transparence d'un interconnecteur fluidique et électrique conforme à l'invention,
- la figure 5 est une vue de dessus interne en transparence de l'interconnecteur selon la figure 4,
- la figure 6 est une vue schématique en coupe d'un dispositif d'électrolyse selon l'invention à un empilement de cellules d'électrolyse.

## EXPOSÉ DÉTAILLÉ DE MODES DE RÉALISATION PARTICULIERS

Les plaques interconnectrices 1, 1' d'électrolyseurs EHT selon l'état de l'art et représentées en figures 1, 1A, 1B et 2 ont été commentées en détail en préambule. Elles ne sont donc pas décrites ci-après.

Les symboles et les flèches de parcours de vapeur d'eau, hydrogène et d'oxygène sont montrés dans l'ensemble des figures à des fins de clarté.

L'électrolyse à haute température selon l'invention peut être réalisée à des températures d'au moins 450°C, typiquement comprises entre 700°C et 1000°C.

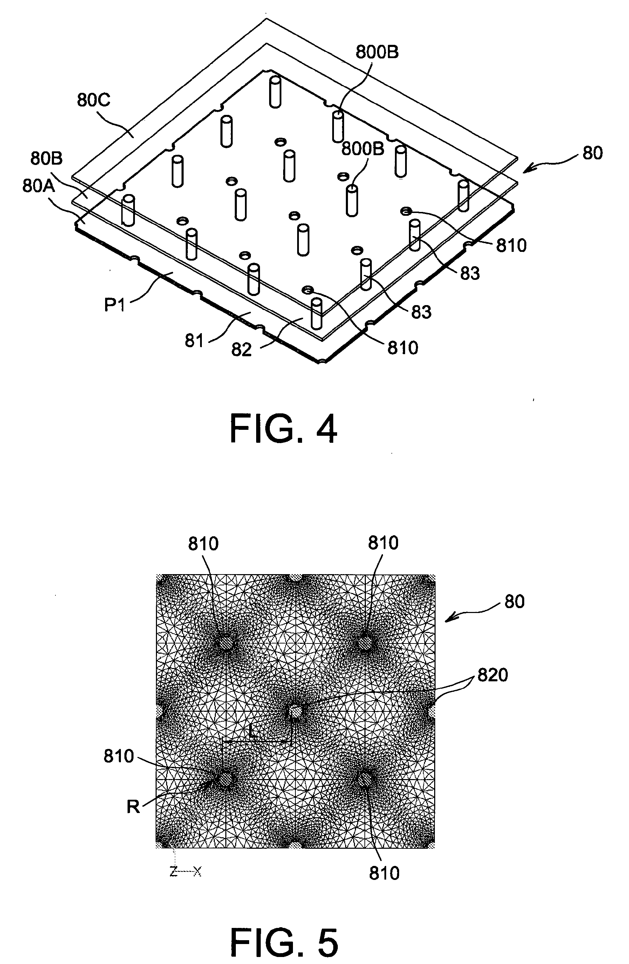

Tel que représenté en figures 3 et 4, un dispositif d'électrolyse selon l'invention comprend une cellule d'électrolyse élémentaire formée d'une cathode 2, d'une anode 4, et d'un électrolyte 6 intercalé entre la cathode et l'anode.

Selon l'invention, il est prévu un premier dispositif 8.0 formant un interconnecteur électrique et fluidique consistant en une pièce métallique 80 délimitée par au moins un plan P1.

La pièce métallique 80 comprend intérieurement deux chambres 81, 82 superposées l'une sur l'autre et une pluralité de trous 810, 820 sensiblement perpendiculaires au plan P1 et divisés en deux groupes.

Un des groupes de trous 810 débouche à la fois sur le plan P1 et directement dans la chambre adjacente 81 et l'autre groupe des trous 820 débouche à la fois sur le plan P1 et dans la chambre 82 la plus éloignée par l'intermédiaire de canaux 83.

Le plan P1 du premier interconnecteur 8.0 est en contact mécanique avec le plan de la cathode 2.

Tel que représenté en figure 3, on injecte directement la vapeur d'eau par la chambre 82 la plus éloignée du plan P1 en vue de la réaction d'électrolyse.

Comme illustré à l'aide de la flèche et des symboles $H_2$ et $H_2O$ en figure 3, la vapeur d'eau injectée par cette chambre 82 circule ensuite par les canaux 83, puis est transformée progressivement en hydrogène dans la porosité de la cathode 2 et grâce à l'amenée uniforme de courant électrique sur toute la surface de cellule par l'interconnecteur 8.0.

Une partie d'hydrogène est prélevée de manière uniforme par chacun des trous 810 de l'autre groupe puis évacuée par la chambre 81 sur laquelle les trous 810 débouchent.

Le dispositif d'électrolyse selon l'invention tel que représenté en figure 3 comprend, du côté anode 4, un deuxième interconnecteur 8.1.

Cet interconnecteur 8.1 consiste également en une pièce métallique 84 délimitée par un plan P2 en contact mécanique direct avec le plan de l'anode 4.

La pièce métallique 84 comprenant intérieurement une chambre 85 et une pluralité de trous 850 répartis sur la surface, sensiblement perpendiculaires au plan et débouchant à la fois sur ce plan P2 et dans la chambre 85.

Comme illustré à l'aide de la flèche et du symbole $O_2$ en figure 3, l'oxygène produit à l'anode 4 est collecté par chacun des trous 850 puis est évacuée par la chambre 85.

On a représenté en figure 4, un exemple de réalisation du premier interconnecteur 8.1 selon l'invention.

La pièce métallique 80 est constituée par l'assemblage de trois plaques entre elles 80A, 80B, 80C parallèlement l'une à l'autre. L'une des plaques 80A est percée des deux groupes de trous 810, 820 agencés selon des lignes parallèles entre elles et régulièrement espacées.

La deuxième plaque 80B est également percée mais d'un seul groupe 800B de trous qui communique avec le groupe de trous 820 de la première plaque 80A par l'intermédiaire d'entretoises tubulaires qui constituent les canaux 83.

L'espace entre la première plaque 80A et la deuxième plaque 80b constitue la chambre 81 de collecte de l'hydrogène.

La troisième plaque 80C est pleine et séparée d'un espace avec la deuxième plaque 80B qui constitue l'autre chambre 81 d'amenée de la vapeur d'eau.

Comme plus visible à la figure 5, les trous 810 sont en quinconce avec les trous 820, quatre trous 810 formant un carré, avec un trou 820 au milieu du carré.

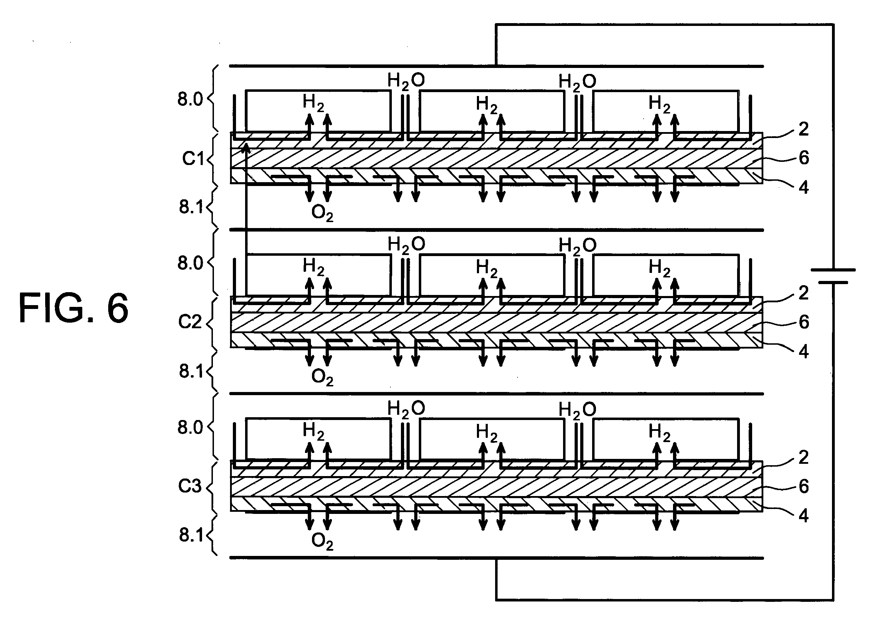

On a représenté schématiquement en figure 6 un empilement de trois cellules d'électrolyse C1, C2, C3 avec les interconnecteurs selon l'invention.

Plus exactement, le courant est amené et récupéré aux bornes de l'empilement constituées d'une part par un premier dispositif interconnecteur 8.0 en contact avec la cathode de la cellule C1 et d'autre part par un deuxième dispositif interconnecteur 8.1 en contact avec la cellule C3.

Une plaque interconnectrice constituée d'un deuxième interconnecteur 8.1 et d'un premier interconnecteur 8.0 est agencée entre la cellule C1 et la cellule C2, le deuxième interconnecteur 8.1 étant en contact avec le plan P2 de l'anode de la cellule C1 et le premier interconnecteur 8.0 étant en contact avec le plan P1 de la cathode de la cellule C2 adjacente.

Cela est réalisé de manière identique entre les deux cellules C2 et C3 adjacentes.

L'inventeur a réalisé des calculs de dimensionnement par éléments finis à l'aide du logiciel d'ANSYS FLUENT version 12.0 pour valider la taille, le nombre et la répartition des trous selon l'invention en fonction d'une pression de fonctionnement imposée.

On précise que les calculs ont été faits sur un motif de répétition tel que présenté en figure 5, le motif de répétition étant un triangle isocèle de côté de longueur L définissant le pas du motif avec un sommet coïncidant avec le centre d'un trou 820 par lequel arrive la vapeur d'eau et un autre sommet coïncidant avec le centre d'un trou 810 par lequel l'hydrogène produit est évacué.

On précise également, que pour chaque calcul, tous les trous 820, 810, 850 respectivement d'amenée de vapeur d'eau, d'évacuation de l'hydrogène produit et d'évacuation de l'oxygène sortie ont le même rayon R.

Les résultats de ces calculs sont présentés ci-après.

On précise tout d'abord que les conditions opératoires sont les suivantes :

• Voltage de 1.17V par cellule d'électrolyse.

• Température d'entrée de fluide injecté dans la chambre 82 de 800°C.

• Composition du mélange de fluide injecté côté cathode 2 : 10 % de $H_2$ et 90 % de $H_2O$ avec un débit correspondant à une sur stoechiométrie de 10 % en $H_2O$ pour une densité de courant i=1 A/cm$^2$, soit un débit molaire de vapeur d'eau:

$$\dot{N}_{H_2O} = \frac{i}{2F} \times \frac{L^2}{2} \times 1.1 \,,$$

Équation dans laquelle L est le pas du motif de calcul évoqué ci-dessus et exprimée en cm et F est la constante de Faraday exprimée en Coulomb par mole.

• Côté anode 4, aucun gaz drainant.

• Tous les gaz sont considérés comme incompressibles.

• Caractéristiques de la cellule d'électrolyse comme suit dans le tableau :

| Cellule d'électrolyse | Unité | Valeur |
|---|---|---|
| **Cathode 2** | | |
| *Matériau constitutif* | | Ni-YZS |
| *Epaisseur* | $\mu m$ | 315 |
| *Conductivité thermique* | $W\,m^{-1}\,K^{-1}$ | 13.1 |
| *Conductivité électrique* | $\Omega^{-1}m^{-1}$ | $10^5$ |
| *Porosité* | | 0.37 |
| *Perméabilité* | $m^2$ | $10^{-13}$ |
| *Tortuosité* | | 4 |
| *Densité de courant* | $A\,m^{-2}$ | 5300 |
| **Anode 3** | | |
| *Matériau constitutif* | | LSM |
| *Epaisseur* | $\mu m$ | 20 |
| *Conductivité thermique* | $W\,m^{-1}\,K^{-1}$ | 9.6 |
| *Conductivité électrique* | $\Omega^{-1}\,m^{-1}$ | $1\,10^4$ |
| *Porosité* | | 0. 37 |
| *Perméabilité* | $m^2$ | $10^{-13}$ |
| *Tortuosité* | 3.0 | 4 |
| *Densité de courant* | $Am^{-2}$ | 2000 |
| **Electrolyte 4** | | |
| *Matériau constitutif* | | YSZ |
| *Epaisseur* | $\mu m$ | 15 |
| *Résistivité* | $\Omega\,m$ | 0.42 |

Exemple 1 :

La pièce métallique 84 constituant le deuxième interconnecteur 8.1 est en contact mécanique direct avec l'anode 4, comme représenté en figure 3.

Le plan P2 de ce deuxième interconnecteur 8.1 est en contact mécanique direct avec le plan de l'anode comme représenté en figure 3.

Les trous 850 de collecte de l'oxygène produit sont alignés en alternance en quinconce exactement comme l'ensemble des trous 810, 820 d'amenée de vapeur d'eau et de collecte d'oxygène respectivement.

Une même pression de 1 bar est imposée en sortie de chambre 81 de collecte d'hydrogène et en sortie de chambre 85 de collecte d'oxygène.

Les calculs pour cet exemple 1 donnent :

| L (mm) | R (mm) | $\chi_{H_2}$ (fraction molaire d'H2) en sortie | Perte de charge $\Delta P$ cathode 2 (Pa) | Densité de courant (A/cm$^2$) | Potentiel moyen Nernst (V) | Perte de charge $\Delta P$ anode 4 (Pa) |
|---|---|---|---|---|---|---|
| 5.00 | 0.50 | 0.881 | 175869.3 | -0.954 | 0.98208 | 113316.0 |
| 5.00 | 1.00 | 0.928 | 131359.4 | -1.007 | 0.96803 | 69535.7 |
| 5.00 | 1.25 | 0.932 | 116601.6 | -1.013 | 0.96682 | 53384.1 |
| 10.00 | 1.00 | 0.858 | 594598.7 | -0.922 | 0.98767 | 429400.3 |
| 10.00 | 2.00 | 0.931 | 437097.0 | -1.004 | 0.96327 | 275135.9 |
| 10.00 | 2.50 | 0.932 | 379284.7 | -1.005 | 0.96167 | 212467.5 |
| 15.00 | 1.50 | 0.834 | 1291219.8 | -0.883 | 0.99422 | 923301.2 |
| 15.00 | 3.00 | 0.936 | 905496.9 | -1.032 | 0.96663 | 645012.9 |
| 15.00 | 3.75 | 0.936 | 782810.8 | -1.030 | 0.96424 | 504715.2 |
| 20.00 | 2.00 | 0.836 | 2297333.8 | -0.873 | 0.99193 | 1642261.5 |
| 20.00 | 4.00 | 0.900 | 1642480.8 | -0.949 | 0.97164 | 1032564.8 |
| 20.00 | 5.00 | 0.918 | 1358301.9 | -1.011 | 0.96665 | 886366.4 |

De cet exemple 1, on peut en conclure que :

- la densité de courant est peu sensible à la valeur du pas L,

- la densité de courant est plus sensible au rayon des trous R. Plus le rayon des trous R est petit et meilleure est la distribution du courant. Par contre, avec un R plus grand, l'évacuation de l'oxygène se fait mieux et la pression diminue du côté de l'anode 4 (pertes de charge $\Delta P$ anode 4 augmentent), ce qui contribue à un potentiel de Nernst plus faible. Ainsi, la densité de courant augmente relativement avec R.

- les pertes de charge à la cathode $\Delta P$ cathode 2 sont relativement élevées. Elles augmentent lorsque le pas L augmente ou le rayon du trou R diminue.

Exemple 2 :

L'exemple 2 est identique à l'exemple 1, à l'exception de la pression imposée: elle est de 30 bars et est la même en sortie de chambre 81 de collecte d'hydrogène et en sortie de chambre 85 de collecte d'oxygène. Les calculs pour cet exemple 2 adonnent :

| L (mm) | R (mm) | $\chi_{H_2}$ (fraction molaire d'H2) en sortie | Perte de charge $\Delta P$ cathode 2 (Pa) | Densité de courant (A/cm$^2$) | Potentiel moyen Nernst (V) | Perte de charge $\Delta P$ anode 4 (Pa) |
|---|---|---|---|---|---|---|
| 5.00 | 0.50 | 0.894 | 6558.4 | -1.017 | 0.97778 | 4486.2 |
| 5.00 | 1.00 | 0.893 | 4607.2 | -1.015 | 0.97775 | 2454.4 |
| 5.00 | 1.25 | 0.886 | 4005.5 | -1.013 | 0.97771 | 1850.4 |
| 10.00 | 1.00 | 0.924 | 22068.0 | -1.021 | 0.97439 | 17985.3 |
| 10.00 | 2.00 | 0.919 | 15468.2 | -1.014 | 0.97617 | 9799.8 |

(suite)

| L (mm) | R (mm) | $\chi_{H_2}$ (fraction molaire d'H2) en sortie | Perte de charge $\Delta P$ cathode 2 (Pa) | Densité de courant (A/cm$^2$) | Potentiel moyen Nernst (V) | Perte de charge $\Delta P$ anode 4 (Pa) |
|---|---|---|---|---|---|---|
| 10.00 | 2.50 | 0.901 | 13337.4 | -1.003 | 0.97666 | 7497.8 |
| 15.00 | 1.50 | 0.925 | 47517.4 | -1.015 | 0.97382 | 40463.3 |
| 15.00 | 3.00 | 0.909 | 33131.8 | -0.999 | 0.97466 | 21974.6 |
| 15.00 | 3.75 | 0.879 | 28531.2 | -0.975 | 0.97442 | 16939.2 |
| 20.00 | 2.00 | 0.924 | 82963.2 | -1.008 | 0.97346 | 71064.3 |
| 20.00 | 4.00 | 0.891 | 57928.9 | -0.9810 | 0.97348 | 38852.1 |
| 20.00 | 5.00 | 0.850 | 49888.0 | -0.953 | 0.97325 | 29952.3 |

De cet exemple 2, on peut en conclure comparativement à l'exemple 1, qu'à une pression de 30 bars les évolutions constatées pour l'exemple 1 restent les mêmes, à l'exception des pertes de charge à la cathode qui sont réduites.

Exemple 3 :

L'exemple 3 est identique à l'exemple 1, à l'exception du fait que le plan de l'anode est en contact mécanique direct avec une grille en matériau conducteur électrique au lieu de la plaque perforée de la pièce 84 comme représentée en figure 3. Cette grille conductrice est donc ici intercalée entre la pièce 84 et le plan de l'anode. On choisit la grille afin qu'elle amène le courant uniformément sur la surface de la cathode. Elle est également choisie perméable de sorte que sa présence génère des pertes de charge négligeables.
Les calculs pour cet exemple 3 donnent :

| L (mm) | R (mm) | $\chi_{H_2}$ (fraction molaire d'H2) en sortie | Perte de charge $\Delta P$ cathode 2 (Pa) | Densité de courant (A/cm$^2$) | Potentiel moyen Nernst (V) | Perte de charge $\Delta P$ anode 4 (Pa) |
|---|---|---|---|---|---|---|
| 5.00 | 0.50 | 0.945 | 188865.2 | -1.033 | 0.95317 | 8.4 |
| 5.00 | 1.00 | 0.941 | 133276.2 | -1.028 | 0.96067 | 8.2 |
| 5.00 | 1.25 | 0.937 | 116679.5 | -1.026 | 0.96387 | 8.1 |
| 10.00 | 1.00 | 0.959 | 630151.5 | -1.046 | 0.94812 | 8.4 |
| 10.00 | 2.00 | 0.965 | 439375.0 | -1.048 | 0.95283 | 8.3 |
| 10.00 | 2.50 | 0.963 | 379908.8 | -1.047 | 0.95519 | 8.2 |
| 15.00 | 1.50 | 0.944 | 1382697.6 | -1.020 | 0.94969 | 8.4 |
| 15.00 | 3.00 | 0.956 | 957116.9 | -1.027 | 0.95376 | 8.2 |
| 15.00 | 3.75 | 0.958 | 821479.4 | -1.027 | 0.95577 | 8.1 |
| 20.00 | 2.00 | 0.937 | 2373524.8 | -1.032 | 0.95129 | 8.5 |
| 20.00 | 4.00 | 0.953 | 1688167.2 | -1.012 | 0.95557 | 8.1 |
| 20.00 | 5.00 | 0.954 | 1447916.4 | -1.011 | 0.95731 | 8.0 |

De cet exemple 3, on peut en conclure que :

- comparativement à l'exemple 1, la densité de courant est légèrement plus forte lorsqu'on met une grille directement en contact mécanique avec l'anode. Cela s'explique par le fait qu'avec un élément grille, on obtient une pression d'oxygène plus faible et donc un potentiel Nernst plus faible.

- comme dans les exemples 1 et 2, la densité de courant est peu sensible à la valeur du pas L.

- la densité de courant augmente quand le rayon des trous R diminue, car la distribution du courant est améliorée du côté de la cathode.

- les pertes de charge à l'anode $\Delta P$ anode sont faibles.

- les pertes de charge $\Delta P$ à la cathode sont relativement élevées. Elles augmentent lorsque le pas L augmente ou le rayon du trou R diminue.

Exemple 4

L'exemple 4 est identique à l'exemple 3, à l'exception de la pression imposée: elle est de 30 bars et est la même en sortie de chambre 81 de collecte d'hydrogène et en sortie de chambre 85 de collecte d'oxygène.

Les calculs pour cet exemple 4 donnent :

| L (mm) | R (mm) | $\chi_{H_2}$ en sortie | Perte de charge $\Delta P$ cathode 2 (Pa) | Densité de courant (A/cm$^2$) | Potentiel moyen Nernst (V) | Perte de charge $\Delta P$ anode 4 (Pa) |
|---|---|---|---|---|---|---|
| 5.00 | 0.50 | 0.849 | 6109.9 | -1.032 | 0.97754 | 0.3 |
| 5.00 | 1.00 | 0.850 | 4293.8 | -1.032 | 0.97753 | 0.3 |
| 5.00 | 1.25 | 0.845 | 3738.3 | -1.032 | 0.97754 | 0.3 |
| 10.00 | 1.00 | 0.901 | 21222.7 | -1.030 | 0.97411 | 0.3 |
| 10.00 | 2.00 | 0.898 | 14935.6 | -1.028 | 0.97641 | 0.3 |
| 10.00 | 2.50 | 0.888 | 12926.8 | -1.027 | 0.97737 | 0.3 |
| 15.00 | 1.50 | 0.906 | 45716.5 | -1.031 | 0.97257 | 0.3 |
| 15.00 | 3.00 | 0.897 | 32110.8 | -1.030 | 0.97492 | 0.3 |
| 15.00 | 3.75 | 0.885 | 27708.2 | -1.029 | 0.97606 | 0.3 |
| 20.00 | 2.00 | 0.897 | 78422.6 | -1.046 | 0.96975 | 0.3 |
| 20.00 | 4.00 | 0.866 | 55320.5 | -1.045 | 0.97213 | 0.3 |
| 20.00 | 5.00 | 0.842 | 47806.5 | -1.045 | 0.97331 | 0.3 |

De cet exemple 4, on peut en conclure comparativement à l'exemple 3, qu'à une pression de 30 bars les évolutions constatées pour l'exemple 3 restent les mêmes, à l'exception des pertes de charge à la cathode qui sont réduites.

Les conclusions que l'on peut tirer des exemples 1 à 4 ci-dessus sont que la performance d'électrolyse proprement dite semble assez peu sensible au dimensionnement du motif de base (valeur du pas L) puisque la fraction molaire d'hydrogène en sortie $\chi_{H_2}$ reste sensiblement constante.

Par contre, les performances hydrauliques semblent être sensibles à la pression imposée, les pertes de charge étant plus élevées à une pression plus faible (1 bar dans les exemples). L'inventeur en conclut donc qu'il parait préféré de faire fonctionner un dispositif d'électrolyse selon l'invention sous pression élevée.

D'autres améliorations peuvent être apportées sans pour autant sortir du cadre de l'invention.

Bien que non détaillé, il va de soi qu'un mode de réalisation avec la vapeur d'eau alimentée par la chambre 81 et une récupération de l'hydrogène produit par la chambre 82 fonctionne.

**Référence citée:**

[1] : Xiango Li, International Journal of hydrogen Energy 30 (2005) 359-371.

**EP 2 545 207 B1**

**Revendications**

1. Dispositif d'électrolyse de l'eau à haute température, comprenant :

   - au moins une cellule d'électrolyse élémentaire formée d'une cathode (2), d'une anode (4), et d'un électrolyte (6) intercalé entre la cathode et l'anode,
   - un premier dispositif (8.0) formant un interconnecteur électrique et fluidique consistant en une pièce métallique (80) délimitée par au moins un plan P1, ladite pièce métallique comprenant intérieurement deux chambres (81, 82), superposées l'une sur l'autre et une pluralité de trous (810, 820) répartis sur la surface, sensiblement perpendiculaires au plan et divisés en deux groupes, dont un groupe de trous (810) débouche à la fois sur le plan P1 et directement dans la chambre adjacente (81) et l'autre groupe des trous (820) débouche à la fois sur le plan P1 et dans la chambre (82) la plus éloignée par l'intermédiaire de canaux (83), le plan P1 du premier interconnecteur étant en contact mécanique avec le plan de la cathode (2),

2. Dispositif d'électrolyse de l'eau selon la revendication 1, dans lequel la chambre adjacente constitue la chambre par laquelle la vapeur d'eau est amenée et la chambre la plus éloignée constitue la chambre de collecte de l'hydrogène produit par l'électrolyse.

3. Dispositif d'électrolyse de l'eau selon la revendication 1, dans lequel la chambre adjacente constitue la chambre de collecte de l'hydrogène produit par l'électrolyse et la chambre la plus éloignée constitue la chambre par laquelle la vapeur d'eau est amenée.

4. Dispositif d'électrolyse de l'eau selon l'une des revendications précédentes, dans lequel les trous (810, 820) sont à section circulaire avec un diamètre compris entre 0.5 et 5 mm, de préférence compris entre 1.25mm et 2.5 mm.

5. Dispositif d'électrolyse de l'eau selon l'une des revendications précédentes, dans lequel la distance entre le centre de deux trous adjacents est comprise entre 7 mm et 28 mm, de préférence compris entre 7 mm et 14 mm.

6. Dispositif d'électrolyse de l'eau selon l'une des revendications précédentes, dans lequel les trous sont alignés selon des lignes parallèles entre elles et régulièrement espacées.

7. Dispositif d'électrolyse de l'eau selon la revendication 6, dans lequel une ligne de groupe trous (810) débouchant à la fois sur le plan P1 et directement dans la chambre adjacente est alternée avec une ligne de groupe de trous (820) qui débouche à la fois sur le plan P1 et dans la chambre la plus éloignée.

8. Dispositif d'électrolyse de l'eau selon la revendication 7, dans lequel l'alternance est réalisée de telle manière que les trous du groupe (810) débouchant à la fois sur le plan P1 et directement dans la chambre adjacente sont en quinconce avec les trous du groupe (820) débouchant à la fois sur le plan P1 et dans la chambre la plus éloignée, chaque trou du groupe (810) débouchant à la fois sur le plan P1 et directement dans la chambre adjacente étant au milieu de quatre trous (820) du groupe débouchant à la fois sur le plan P1 et dans la chambre la plus éloignée et vice-versa.

9. Dispositif d'électrolyse de l'eau selon la revendication 8, dans lequel les quatre trous (810) d'un groupe forment un carré, le trou (820) de l'autre groupe étant au milieu du carré.

10. Dispositif d'électrolyse de l'eau selon l'une des revendications précédentes, comprenant un deuxième dispositif (8.1) formant un interconnecteur électrique et fluidique consistant en une pièce métallique (84) délimitée par au moins un plan P2, ladite pièce métallique comprenant intérieurement une chambre (85) et une pluralité de trous (850) répartis sur la surface, sensiblement perpendiculaires au plan et débouchant à la fois sur ce dernier P2 et dans la chambre (85), le plan P2 du deuxième interconnecteur (8.1) étant en contact mécanique avec le plan de l'anode (4).

11. Dispositif d'électrolyse de l'eau selon la revendication 10, dans lequel le plan P2 est en contact mécanique direct avec le plan de l'anode.

12. Dispositif d'électrolyse de l'eau selon la revendication 10, dans lequel le plan P2 est en contact mécanique direct avec une grille en matériau conducteur électrique, la grille étant elle-même en contact mécanique direct avec le plan de l'anode.

13. Dispositif d'électrolyse de l'eau à haute température selon l'une des revendications 10 à 12, comprenant un empilement de cellules d'électrolyse élémentaires formées chacune d'une cathode, d'une anode et d'un électrolyte intercalé entre la cathode et l'anode, une plaque interconnectrice comprenant un premier (8.0) et un deuxième (8.1) interconnecteur étant agencée entre deux cellules élémentaires adjacentes, tel que le plan P1 du premier interconnecteur est en contact mécanique avec la cathode d'une des deux cellules élémentaires et le plan P2 du deuxième interconnecteur est en contact mécanique avec l'anode de l'autre des deux cellules élémentaires.

14. Ensemble de production d'hydrogène comprenant une pluralité de dispositifs d'électrolyse selon la revendication 13.

**Patentansprüche**

1. Hochtemperatur-Wasserelektrolysevorrichtung, die Folgendes umfasst:

    - mindestens eine Grundelektrolysezelle, die von einer Kathode (2), einer Anode (4) und einem Elektrolyt (6), das zwischen der Kathode und der Anode eingeschoben ist, gebildet wird,
    - eine erste Vorrichtung (8.0), die einen elektrischen und Flüssigkeitsseparator bildet, der aus einem Metallteil (80) besteht, das von mindestens einer Ebene P1 abgegrenzt wird, wobei das Metallteil im Inneren zwei Kammern (81, 82), die einander überlagert sind, und mehrere Löcher (810, 820) umfasst, die auf der Oberfläche verteilt, im Wesentlichen senkrecht zu der Ebene und in zwei Gruppen aufgeteilt sind, von denen eine Gruppe von Löchern (810) gleichzeitig auf der Ebene P1 und direkt in der benachbarten Kammer (81) mündet und die andere Gruppe von Löchern (820) gleichzeitig auf der Ebene P1 und in der am weitesten entfernten Kammer (82) mittels Kanälen (83) mündet, wobei die Ebene P1 des ersten Separators in mechanischem Kontakt mit der Ebene der Kathode (2) steht.

2. Wasserelektrolysevorrichtung nach Anspruch 1, wobei die benachbarte Kammer die Kammer darstellt, durch die der Wasserdampf geführt wird, und die am weitesten entfernte Kammer die Kammer zum Sammeln von durch die Elektrolyse produziertem Wasserstoff darstellt.

3. Wasserelektrolysevorrichtung nach Anspruch 1, wobei die benachbarte Kammer die Kammer zum Sammeln von durch die Elektrolyse produziertem Wasserstoff darstellt und die am weitesten entfernte Kammer die Kammer darstellt, durch die der Wasserdampf geführt wird.

4. Wasserelektrolysevorrichtung nach einem der vorhergehenden Ansprüche, wobei die Löcher (810, 820) einen kreisförmigen Querschnitt mit einem Durchmesser haben, der zwischen 0,5 und 5 mm liegt, vorzugsweise zwischen 1,25 mm und 2,5 mm liegt.

5. Wasserelektrolysevorrichtung nach einem der vorhergehenden Ansprüche, wobei der Abstand zwischen der Mitte von zwei benachbarten Löchern zwischen 7 mm und 28 mm liegt, vorzugsweise zwischen 7 mm und 14 mm liegt.

6. Wasserelektrolysevorrichtung nach einem der vorhergehenden Ansprüche, wobei die Löcher entlang parallelen und regelmäßig beabstandeten Linien untereinander ausgerichtet sind.

7. Wasserelektrolysevorrichtung nach Anspruch 6, wobei eine Linie einer Gruppe von Löchern (810), die gleichzeitig auf der Ebene P1 und direkt in der benachbarten Kammer mündet, mit einer Linie einer Gruppe von Löchern (820) alterniert wird, die gleichzeitig auf der Ebene P1 und in der am weitesten entfernten Kammer mündet.

8. Wasserelektrolysevorrichtung nach Anspruch 7, wobei die Alternation derart umgesetzt wird, dass die Löcher der Gruppe (810), die gleichzeitig auf der Ebene P1 und direkt in der benachbarten Kammer mündet, mit den Löchern der Gruppe (820) versetzt sind, die gleichzeitig auf der Ebene P1 und in der am weitesten entfernten Kammer mündet, wobei jedes Loch der Gruppe (810), die gleichzeitig auf der Ebene P1 und direkt in der benachbarten Kammer mündet, in der Mitte von vier Löchern (820) der Gruppe ist, die gleichzeitig auf der Ebene P1 und in der am weitesten entfernten Kammer mündet, und umgekehrt.

9. Wasserelektrolysevorrichtung nach Anspruch 8, wobei die vier Löcher (810) einer Gruppe ein Quadrat bilden, wobei das Loch (820) der anderen Gruppe in der Mitte des Quadrats ist.

10. Wasserelektrolysevorrichtung nach einem der vorhergehenden Ansprüche, die eine zweite Vorrichtung (8.1) umfasst, die einen elektrischen und Flüssigkeitsseparator bildet, der aus einem Metallteil (84) besteht, das von mindestens einer Ebene P2 abgegrenzt wird, wobei das Metallteil im Inneren eine Kammer (85) und mehrere Löcher (850) umfasst, die auf der Oberfläche verteilt, im Wesentlichen senkrecht zu der Ebene und in zwei Gruppen aufgeteilt sind und gleichzeitig auf dieser letzteren P2 und in der Kammer (85) münden, wobei die Ebene P2 des zweiten Separators (8.1) in mechanischem Kontakt mit der Ebene der Anode (4) steht.

11. Wasserelektrolysevorrichtung nach Anspruch 10, wobei die Ebene P2 in direktem mechanischem Kontakt mit der Ebene der Anode steht.

12. Wasserelektrolysevorrichtung nach Anspruch 10, wobei die Ebene P2 in direktem mechanischem Kontakt mit einem Gitter aus einem Elektrizitätsleitermaterial steht, wobei das Gitter selbst in direktem mechanischem Kontakt mit der Ebene der Anode steht.

13. Hochtemperatur-Wasserstoffelektrolysevorrichtung nach einem der Ansprüche 10 bis 12, die einen Stapel von Grundelektrolysezellen umfasst, die jeweils von einer Kathode, einer Anode und einem Elektrolyt, der zwischen der Kathode und der Anode eingeschoben ist, gebildet werden, wobei eine Separatorplatte, die einen ersten (8.0) und einen zweiten (8.1) Separator umfasst, zwischen zwei benachbarten Grundzellen angeordnet ist, so dass die Ebene P1 des ersten Separators in mechanischem Kontakt mit der Kathode einer der zwei Grundzellen steht und die Ebene P2 des zweiten Separators in mechanischem Kontakt mit der Anode der anderen der zwei Grundzellen steht.

14. Wasserstoffproduktionsanordnung, die mehrere Elektrolysevorrichtungen nach Anspruch 13 umfasst.

**Claims**

1. Device for high temperature electrolysis of water, comprising:

   - at least one elementary electrolysis cell formed from a cathode (2), an anode (4), and an electrolyte (6) intermediate between the cathode and the anode,
   - a first device (8.0) forming an electric and fluid interconnector composed of a metallic part (80) delimited by at least one plane P1, said metallic part comprising two internal chambers (81, 82), superposed one on the other and a plurality of holes (810, 820) distributed around the surface, approximately perpendicular to the plane and divided into two groups, one of the groups of holes (810) opens up onto plane P1 and directly into the adjacent chamber (81) and the other group of holes (820) opens up onto plane P1 and also in the furthest chamber (82) through channels (83), the plane P1 of the first interconnector being in mechanical contact with the plane of the cathode (2).

2. Device for electrolysis of water according to claim 1, in which the adjacent chamber is the chamber through which steam is delivered and the furthest chamber is the chamber through which hydrogen produced by electrolysis is collected.

3. Device for electrolysis of water according to claim 1, in which the adjacent chamber is the chamber through which hydrogen produced by electrolysis is collected and the furthest chamber is the chamber through which steam is delivered.

4. Device for electrolysis of water according to one of the previous claims, in which the holes (810, 820) have a circular cross-section with a diameter of between 0.5 and 5 mm, and preferably between 1.25 mm and 2.5 mm.

5. Device for electrolysis of water according to one of the previous claims, in which the distance between the centre of two adjacent holes is between 7 mm and 28 mm, and preferably between 7 mm et 14 mm.

6. Device for electrolysis of water according to one of the previous claims, in which the holes are aligned along parallel lines at equal intervals.

7. Device for electrolysis of water according to claim 6, in which one group of aligned holes (810) opening up onto plane P1 and directly into the adjacent chamber alternates with another group of aligned holes (820) that opens up onto plane P1 and into the furthest chamber.

8. Device for electrolysis of water according to claim 7, in which alternation is achieved such that the holes in the group (810) opening up both on plane P1 and directly in the adjacent chamber are staggered with the holes (820) opening up both on plane P1 and in the furthest chamber, each hole in the group (810) opening up both onto plane P1 and directly in the adjacent chamber being in the middle of four holes (820) in the group opening up both onto plane P1 and in the furthest chamber, and vice versa.

9. Device for electrolysis of water according to claim 8, in which the four holes (810) in a group form a square, the hole (820) in the other group being in the middle of the square.

10. Device for electrolysis of water according to one of the previous claims, comprising a second device (8.1) forming an electrical and fluid interconnector composed of a metal part (84) delimited by at least one plane P2, said metallic part comprising an internal chamber (85) and a plurality of holes (850) distributed over the entire surface, approximately perpendicular to the plane and opening up onto this plane P2 and into the chamber (85), the plane P2 of the second interconnector (8.1) being in mechanical contact with the plane of the anode (4).

11. Device for electrolysis of water according to claim 10, in which the plane P2 is in direct mechanical contact with the plane of the anode.

12. Device for electrolysis of water according to claim 10, in which the plane P2 is in direct mechanical contact with a gate made of an electrically conducting material, the gate being itself in direct mechanical contact with the plane of the anode.

13. Device for electrolysis of water at high temperature according to one of claims 10 to 12, comprising a stack of elementary electrolysis cells each formed from a cathode, an anode and an electrolyte placed between the cathode and the anode, an interconnecting plate comprising a first (8.0) and a second (8.1) interconnector being formed between two adjacent elementary cells such that the plane P1 of the first interconnector is in mechanical contact with the cathode of one of the two elementary cells and the plane P2 of the second interconnector is in mechanical contact with the anode of the other of the two elementary cells.

14. Hydrogen production assembly comprising a plurality of electrolysis devices according to claim 13.

FIG. 1

FIG. 1A

FIG. 1B

FIG. 2

FIG. 3

## FIG. 4

## FIG. 5

FIG. 6

EP 2 545 207 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• FR 2921390

**Littérature non-brevet citée dans la description**

• **XIANGO LI.** *International Journal of hydrogen Energy,* 2005, vol. 30, 359-371